Europäisches Patentamt

**European Patent Office**

Office européen des brevets

(19)

(11) Numéro de publication: **0 028 972**

**A1**

(12)

# DEMANDE DE BREVET EUROPEEN

(21) Numéro de dépôt: **80401576.6**

(22) Date de dépôt: **04.11.80**

(51) Int. Cl.³: **G 01 N 25/16**

(30) Priorité: **05.11.79 FR 7927215**

(43) Date de publication de la demande:
**20.05.81 Bulletin 81/20**

(84) Etats Contractants Désignés:
**AT BE CH DE GB IT LI NL SE**

(71) Demandeur: **VETTORI DE ALMEIDA
RODRIGUES,Carlos Alberto
30, rue Gassendi
F-75014 Paris(FR)**

(72) Inventeur: **VETTORI DE ALMEIDA RODRIGUES,Carlos
Alberto
30, rue Gassendi
F-75014 Paris(FR)**

(74) Mandataire: **Peuscet, Jacques
3, Square de Maubeuge
F-75009 Paris(FR)**

(54) **Dilatomètre différentiel.**

(57) Le dilatomètre différentiel selon l'invention est notamment destiné à la détermination, pour de très faibles températures, des variations relatives de longueur d'un échantillon solide (1) et d'un étalon (2) placés à l'intérieur d'un tube support (4) ; ces variations de longueur sont transmises par deux poussoirs (6) à un capteur de déplacement électrique logé dans la tête du dilatomètre ; le tube-support (4) et les deux poussoirs (6) sont placés verticalement en dessous de la tête du dilatomètre ; un cryostat (8) à l'intérieur duquel est logé le tube-support (4) permet la circulation d'un fluide cryogénique autour de l'échantillon (1) et de l'étalon (2), la partie du tube-support où ils sont placés étant, en outre, entourée à l'intérieur du cryostat (8) par un manchon de chauffage électrique (12).

./...

FIG. 2

DILATOMÈTRE DIFFÉRENTIEL.

La présente invention concerne les appareils tels que les dilatomètres et plus particulièrement les dilatomètres différentiels destinés à mesurer simultanément les variations dimensionnelles de deux échantillons, dont l'un peut être un étalon dont la dilatation thermique est parfaitement connue. Quelques applications typiques des dilatomètres sont: mesurer la dilatation thermique des solides; detecter des transformations de phases dans un matériau; et étudier la compatibilité des matériaux en fonction de la température.

Dans un dilatomètre différentiel de type connu, on détermine la variation relative de longueur d'un échantillon à étudier par rapport à un étalon. L'échantillon et l'étalon à étudier sont placés dans un tube ou gaine-support en silice et leurs variations dimensionnelles sont transmises par deux poussoirs également en silice à un capteur de déplacement mesurant la différence de dilatation. On peut, à cet égard, distinguer trois sortes de capteurs de déplacement selon leurs principes de fonctionnement mécanique, optique ou électrique. Le capteur de déplacement électrique est plus particulièrement intéressant car il permet d'amplifier notablement les variations dimensionnelles des échantillons, surtout dans le cas où ces derniers ont un coefficient de dilatation extrêmement faible. Le capteur de déplacement électrique peut être constitué d'un noyau déplaçable à l'intérieur d'un enroulement électrique. L'enroulement en question peut constituer l'enroulement primaire, alimenté en moyenne fréquence, d'un transformateur linéaire différentiel dont le secondaire est apte à délivrer une tension directement proportionnelle au déplacement du noyau, tension que l'on peut apprécier au moyen d'un enregistreur potentiométrique classique.

La présente invention vise à décrire un dilatomètre différentiel à capteur de déplacement électrique, du type ci-dessus indiqué, sur lequel ont été apportés les perfectionnements suivants :

- Le tube-support en silice vitreuse est logé à l'intérieur d'un cryostat permettant la circulation d'un fluide cryogénique, tel que l'hélium liquide, autour de l'échantillon à étudier et de l'étalon. Grâce à un tel cryostat, le dilatomètre selon l'invention est capable de fonctionner à des températures très basses pouvant aller jusqu'à 4°K.

- Pour assurer le maintien d'une température rigoureusement homogène dans la zone où sont placés l'échantillon à étudier et l'étalon, on adopte une disposition verticale, le cryostat qui renferme le tube-support étant placé en-dessous de la tête du dilatomètre, si bien que pendant la circulation du fluide cryogénique, c'est la partie où sont disposés l'échantillon et l'étalon qui connaît la plus faible température.

— On désire également étudier les caractéristiques dilatométriques de l'échantillon en fonction d'une température susceptible de varier, comme on le désire, par exemple à l'intérieur d'une gamme de 4 à 500°K. C'est ainsi que l'on prévoit d'incorporer à l'intérieur du cryostat un manchon de chauffage électrique entourant lui-même la partie du tube-support où sont placés l'étalon et l'échantillon à étudier. La quantité de chaleur fournie par le manchon de chauffage électrique est commandée par une boucle de régulation dans laquelle le signal de mesure fourni par un capteur de température placé sur le manchon est comparé à un signal de référence variable issu d'un générateur programmable, l'écart entre ces deux grandeurs commandant ensuite, après amplification, un générateur de puissance alimentant le manchon de chauffage. On peut ainsi obtenir, avec un capteur de température linéarisé, un refroidissement ou un chauffage linéaires de l'échantillon à étudier et de l'étalon, dans le domaine de température de l'appareil.

— L'appareil selon l'invention est non seulement destiné à la détermination des variations relatives ou absolues de longueur d'un échantillon solide en fonction de la température et/ou du temps, mais il permet également de mesurer l'influence d'une pression d'appui variable sur la variation de longueur d'un échantillon solide. Pour ce faire, les deux poussoirs transmettant la variation de longueur de l'échantillon et de l'étalon sont chacun associés, dans la tête du dilatomètre, à un coulisseau qui porte un capteur de déplacement électrique; chacun des deux coulisseaux précités est soumis à une force d'appui réglable produite par au moins un ressort, l'un des deux capteurs de déplacement électrique étant destiné à mesurer la variation de longueur du ressort d'appui et, par conséquent, la force d'appui exercée sur l'échantillon à étudier, tandis que l'autre capteur de déplacement électrique sert à déterminer la variation de longueur relative de l'échantillon à étudier par rapport à l'étalon. C'est ainsi que dans l'appareil selon l'invention, la force d'appui exercée sur l'échantillon à étudier peut varier et peut être modifié dans une gamme allant par exemple, d'environ 0 à 1N, pendant les essais.

La présente invention a donc pour objet le produit industriel nouveau que constitue un dilatomètre différentiel destiné à la détermination, en particulier à de basses températures, des variations relatives de longueur de deux échantillons solides, dont l'un peut être un étalon dont la dilatation thermique est parfaitement connue, ou des variations absolues de longueur d'un échantillon solide, l'échantillon et l'étalon étant placés à l'intérieur d'un tube qui les supporte, les variations de longueur de l'échantillon et de l'étalon étant transmises par deux poussoirs s'étendant à l'intérieur du tube-support précité, dans la tête du dilatomètre où les deux poussoirs produisent le déplacement relatif d'un noyau par rapport à l'enroulement bobiné d'un capteur de déplacement électrique, le signal de sortie dudit capteur étant envoyé sur un amplificateur dont la grandeur de sortie est proportionnelle à la variation relative de longueur de l'échantillon à étudier par rapport à l'étalon, caractérisé par le fait que le tube-support et les deux poussoirs sont disposés verticalement, le tube-support étant placé au-dessous de la tête du dilatomètre; que le tube-support est au moins partiellement logé à l'intérieur d'un cryostat permettant la circulation d'un fluide cryogénique, pendant la mesure, autour de l'échantillon à étudier et de l'étalon, la partie du tube-support où sont placés l'échantillon à étudier et l'étalon étant, en outre, entourée dans le cryostat par un manchon de chauffage électrique dont on peut faire varier le dégagement thermique au moyen d'un dispositif de régulation de la température, ledit manchon évitant un contact direct entre l'échantillon et l'étalon d'une part et le fluide cryogénique d'autre part.

Dans un mode préféré de réalisation, le dilatomètre selon l'invention comporte des capteurs de température destinés à la détermination de la température de l'échantillon à étudier et de la température de l'autre échantillon à étudier ou de l'étalon, les signaux de mesure des capteurs de température ainsi que le signal de sortie représentatif de la variation relative de longueur de l'échantillon à étudier par rapport à l'étalon et le signal représentatif de la force d'appui exercée sur l'échantillon à étudier étant, par exemple, envoyés sur un enregistreur analogique et/ou sur une acquisition numérique de données interfacée ou non avec un micro/mini-ordinateur et périphériques du système d'acquisition et traitement de données; l'appareil peut aussi comporter des capteurs de température destinés à la détermination d'un gradient de température éventuel sur l'échantillon et l'étalon; le dispositif de régulation consiste en une boucle de régulation fermée dans laquelle le signal de mesure fourni par au moins un capteur de température linéarisé placé sur le manchon de chauffage électrique est comparé à un signal de référence éventuellement variable, par exemple linéairement, fourni par un générateur programmable à tension continue, l'écart entre ces deux grandeurs commandant un générateur de puissance qui alimente le chauffage électrique du manchon. On entend par capteur de température linéarisé un capteur dont le signal est ou est rendu linéaire en fonction de la température.

Il est à noter que, pour éviter l'influence d'un champ magnétique sur l'échantillon, on prévoit que l'enroulement chauffant du manchon de chauffage soit bobiné "deux fils en main" après pliage en boucle du fil utilisé, de façon à constituer deux bobines à champs inverses.

Avantageusement, les deux poussoirs et le tube-support sont en silice vitreuse, tandis que le manchon de chauffage électrique, qui est réalisé en un métal bon-conducteur, tel que le cuivre, est fixé par soudage à sa partie haute sur la base d'un tube de protection en matériau mauvais conducteur de la chaleur, tel que l'acier inoxydable, qui entoure le tube-support, le cryostat renfermant le manchon de chauffage et la base du tube de protection. Le cryostat, le tube de protection et le manchon de chauffage électrique qui en est solidaire sont, de préférence, suspendus et fixés par vissage à la paroi inférieure d'une platine en matériau mauvais conducteur de la chaleur, portant sur sa paroi supérieure la tête du dilatomètre, ladite platine étant supportée par des moyens anti-vibratoires, la tête du dilatomètre supportant le tube-support. Le tube de protection et le manchon de chauffage déterminent une chambre reliée à la zone où se trouve(nt) le (ou les) capteur(s) de déplacement, ladite zone étant isolée de l'extérieur par un capot, de préférence mauvais conducteur thermique, et la chambre pouvant être balayée par un gaz, de préférence bon-conducteur thermique. En outre, la zone entourée par le capot est avantageusement thermostatée au voisinage de la température ambiante. De plus, il est possible de réaliser un vide de par exemple $10^{-6}$ Torr, de réaliser une atmosphère statique ou dynamique dans ladite chambre.

Selon une caractéristique avantageuse, chacun des deux poussoirs est solidarisé à sa partie supérieure avec un coulisseau, les deux coulisseaux précités étant guidés verticalement par des glissières selon un axe parallèle à l'axe des poussoirs, chaque coulisseau étant soumis à une force d'appui réglable au moyen d'un ressort d'appui. Les deux ressorts d'appui précités peuvent être comprimés de façon réglable au moyen de l'écrou d'un système vis-écrou, l'écrou dudit système étant guidé en translation par les glissières verticales des deux coulisseaux alors que la vis associée est fixe par rapport aux-dites glissières et est solidaire d'une roue dentée engrenant avec le pignon d'un moteur électrique d'entraînement.

De préférence, les deux coulisseaux sont associés, chacun, à un capteur de déplacement électrique dont le noyau est déplaçable par rapport à l'enroulement bobiné qui est solidaire du coulisseau; le coulisseau du poussoir s'appuyant sur l'échantillon est solidaire, dans son mouvement, du noyau du capteur de déplacement électrique associé à l'autre coulisseau, la position du noyau précité par rapport à l'enroulement bobiné associé pouvant être ajustée, pour le réglage du zéro, au moyen d'une vis de réglage. La variation de longueur du ressort s'appuyant sur l'échantillon est transmise au noyau du capteur de déplacement électrique associé au coulisseau du poussoir s'appuyant sur l'échantillon, le capteur considéré permettant de déterminer, après étalonnage, l'intensité de la force d'appui exercée par le ressort d'appui sur l'échantillon à étudier et d'en déduire celle exercée sur l'étalon; au droit du coulisseau du poussoir s'appuyant sur l'étalon, l'écrou du système vis-écrou porte une vis de réglage déplaçable par rapport à lui, ladite vis permettant d'ajuster, par l'intermédiaire d'une tige enfilée à l'intérieur du ressort d'appui afférent, la position du noyau relativement à l'enroulement bobiné du capteur de déplacement destiné à déterminer la force d'appui exercée sur l'échantillon à étudier et l'étalon.

Selon une autre caractéristique avantageuse, les deux coulisseaux des poussoirs sont, chacun, supportés par au moins un ressort de compensation porté par les glissières verticales des coulisseaux, le ressort précité permettant, par un réglage à vis, l'ajustement de la·position des coulisseaux sur l'axe de coulissement des glissières et équilibrant le poids de l'ensemble coulissant solidaire de chaque coulisseau.

Pour mieux faire comprendre l'objet de la présente invention on va en décrire ci-après, à titre d'exemple purement illustratif et non limitatif, un mode de réalisation représenté sur le dessin annexé.

Sur ce dessin :

- la figure 1A représente le schéma de principe du dilatomètre différentiel selon l'invention;

- la figure 1B représente le schéma de principe du dilatomètre selon l'invention comportant un autre système de traitement des grandeurs de mesure;

- la figure 2 est une coupe axiale verticale effectuée à la partie inférieure du dilatomètre, dans sa zone où se trouvent disposés le tube-support et le cryostat;

- la figure 3 est une vue schématique en coupe axiale verticale de la tête du dilatomètre, effectuée selon III-III de la figure 4, et

- la figure 4 représente schématiquement une coupe horizontale de la tête du dilatomètre effectuée selon IV-IV de la figure 3.

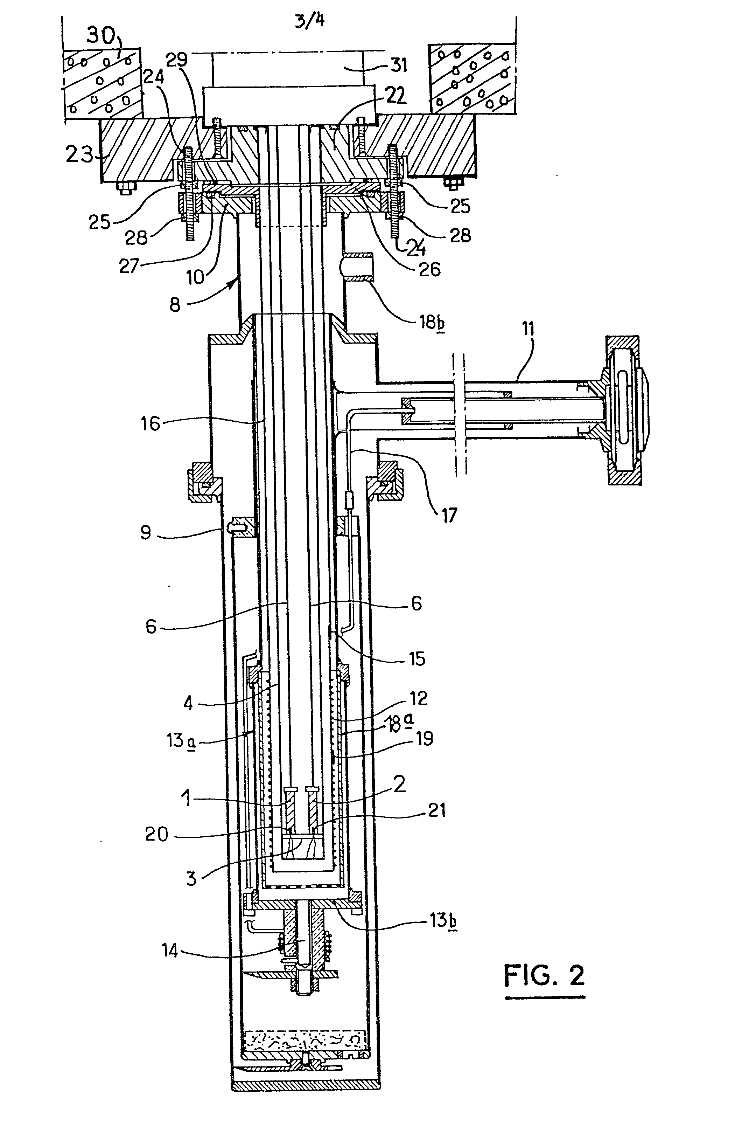

En se référant au dessin, on voit que l'on a représenté un appareil destiné à la détermination de la variation relative de longueur d'un échantillon à étudier 1 par rapport à un deuxième échantillon à étudier 2 (figure 2), l'échantillon 2 pouvant aussi être un étalon dont les caractéristiques dilatométriques sont connues. De façon classique, l'échantillon à étudier 1

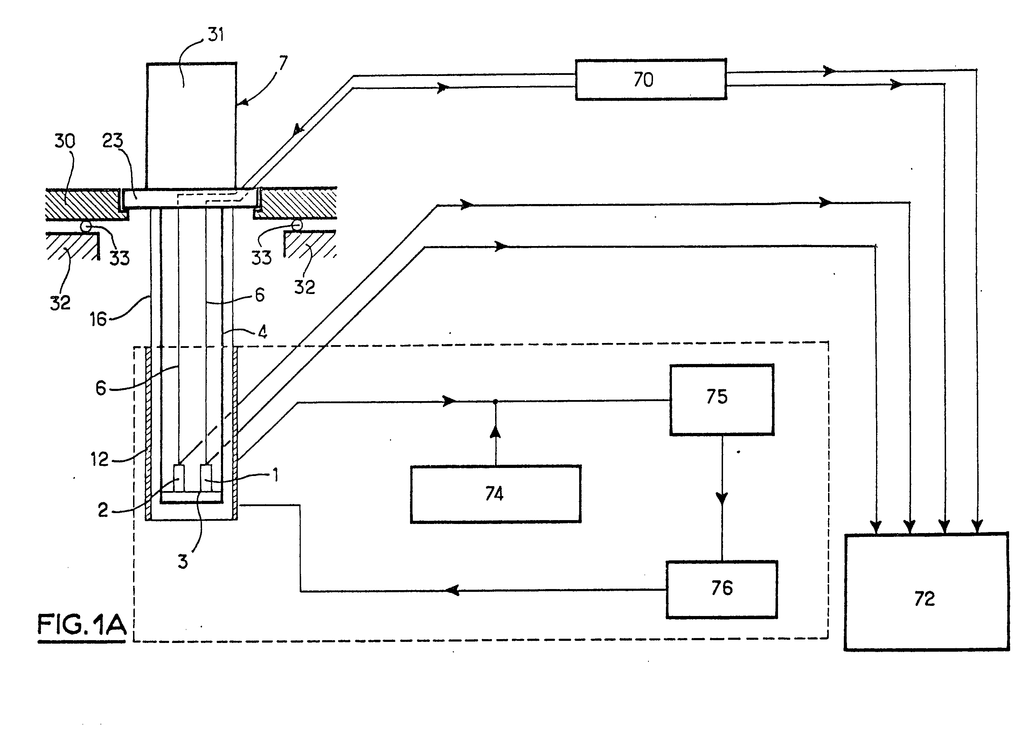

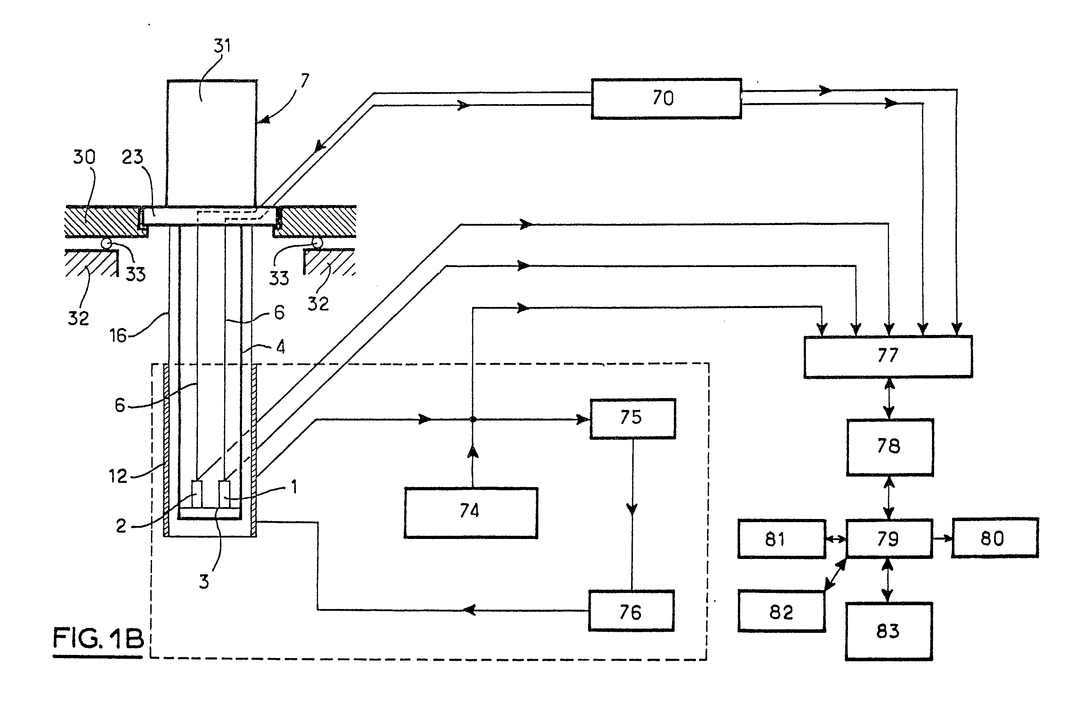

et l'étalon 2 sont placés sur une plaquette 3 en silice vitreuse portée par un tube-support 4 également en silice vitreuse. A l'intérieur du tube-support 4 sont enfilés deux poussoirs 6 en silice vitreuse dont les bases de section élargie prennent appui respectivement sur l'étalon 2 et l'échantillon à étudier 1. Ainsi qu'on le verra par la suite, les deux poussoirs sont destinés à transmettre la variation de longueur de l'étalon 2 et de l'échantillon à étudier 1 à deux capteurs de déplacement électrique disposés à l'intérieur de la tête 7 (figures 1A, 1B) du dilatomètre située au-dessus du tube-support 4.

Le dilatomètre de cet exemple de réalisation est plus particulièrement destiné à l'étude, à de très basses températures comprises entre 4 et 500°K, des variations dimensionnelles d'alliages qui ont un bas Ms (fer-nickel-carbone), en vue d'appréhender le phénomène de transformation de l'austénite en martensite ainsi que des phénomènes connexes. C'est pour cette raison que le tube-support 4 en silice vitreuse est enfilé à l'intérieur d'un cryostat 8 permettant la circulation d'un fluide cryogénique tel que l'azote ou l'hélium liquide autour de l'échantillon à étudier 1 et de l'étalon 2. Le corps 9 du cryostat a la forme générale d'un cylindre ouvert à son extrémité supérieure et fermé à son extrémité inférieure. Une bride d'assemblage rapportée 10 est solidarisée avec l'extrémité supérieure ouverte du corps 9 du cryostat. Un conduit 11 se raccorde en équerre au corps 9 du cryostat. Par l'extrémité libre du conduit 11 se fait l'introduction de la canne de transfert (non représentée) pour le transfert d'azote ou d'hélium liquide contenu dans un réservoir, en direction du corps 9 du cryostat.

On peut aussi chauffer l'échantillon 1 à étudier et l'étalon 2, grâce à un manchon de chauffage électrique 12 consistant en un tube en cuivre autour duquel est enroulé une résistance électrique. Le manchon de chauffage 12 est lui-même placé à l'intérieur d'un boîtier cylindrique fermé 13a dont le fond 13b comporte un ajutage 14 permettant l'introduction du fluide cryogénique. Le manchon chauffant 12 est disposé autour de la partie inférieure du tube-support 4 où sont placés l'échantillon 1 et l'étalon 2; il est fixé à sa partie supérieure par une brasure 15 à un tube de protection 16 en acier inoxydable.

Le fluide cryogénique qui est introduit par l'extrémité ouverte du conduit 11 traverse un tube intérieur qui communique avec l'ajutage 14 prévu sur le fond 13b au moyen d'une canalisation de faible section 17. L'ajutage 14 débouche au-dessous du manchon de chauffage électrique 12; le fluide cryogénique issu de l'ajutage 14 traverse la paroi inférieure perforée d'un fourreau en cuivre 18a solidaire du boîtier 13a et peut s'élever à l'intérieur du corps 9 du cryostat pour s'échapper par une canalisation de sortie 18b disposée en partie haute du cryostat, juste en-dessous de sa bride d'assemblage 10. La circulation montante de fluide cryogénique à l'intérieur du cryostat 8 peut être favorisée par l'emploi d'une pompe d'aspiration branchée sur la canalisation de sortie 18b.

Un thermocouple 19 du type (Au/Fe-Ni/Cr) est placé sur le manchon de chauffage électrique 12, tandis que deux autres thermocouples 21, 20 sont respectivement placés sur l'étalon 2 et sur l'échantillon à étudier 1. Les conducteurs métalliques des thermocouples 20 et 21 sortent du cryostat 8 par son extrémité supérieure ouverte et traversent la paroi d'un disque intermédiaire 22. Les conducteurs métalliques (non représentés) du thermocouple 19 sortent du cryostat 8 par une bride d'assemblage 26.

Le tube-support 4, le tube de protection 16 solidarisé à sa partie inférieure avec le manchon de chauffage 12 ainsi que le cryostat 8 constituent des éléments emboîtés les uns à l'intérieur des autres. Le tube de protection 16 et le manchon de chauffage 12 ainsi que le cryostat 8, sont suspendus et fixés à une platine 23; le disque intermédiaire 22 s'engage à l'intérieur d'un chambrage cylindrique de la platine 23 et il y est fixé au moyen de tiges filetées 24 qui coopèrent avec des écrous 25; la bride d'assemblage rapportée 26, fixée à l'extrémité supérieure du tube de protection 16 prend appui, par l'intermédiaire d'un joint torique d'étanchéité 27 sur la bride d'assemblage 10 du cryostat 8. Des trous circulaires en nombre égal à celui des tiges filetées 24 sont prévus à la périphérie de la bride d'assemblage 10. Une fois que le disque intermédiaire 22 a été fixé sur la platine 23, par serrage des boulons 25 sur les tiges filetées 24, on présente la bride d'assemblage 10 sur laquelle vient en appui la bride d'assemblage 26 du tube de protection et, après avoir enfilé la bride 10 autour des tiges filetées 24, on procède à la fixation de cet ensemble au moyen des écrous 28. Ainsi qu'on peut le voir sur la figure 2 du dessin, un joint 29 est, avant assemblage, interposé entre le disque intermédiaire 22 et la bride 26 du tube de protection.

La platine 23, sous laquelle sont suspendus le cryostat 8, le tube de protection 16 et le manchon de chauffage 12, est elle-même fixée par vissage sous un support lourd 30 prenant appui sur un socle lourd 32 par l'intermédiaire de trois isolateurs pneumatiques 33 (figures 1A, 1B) empêchant la transmission des vibrations. Le centre de gravité de l'appareil se trouve sensiblement dans le plan défini par les trois isolateurs pneumatiques 33.

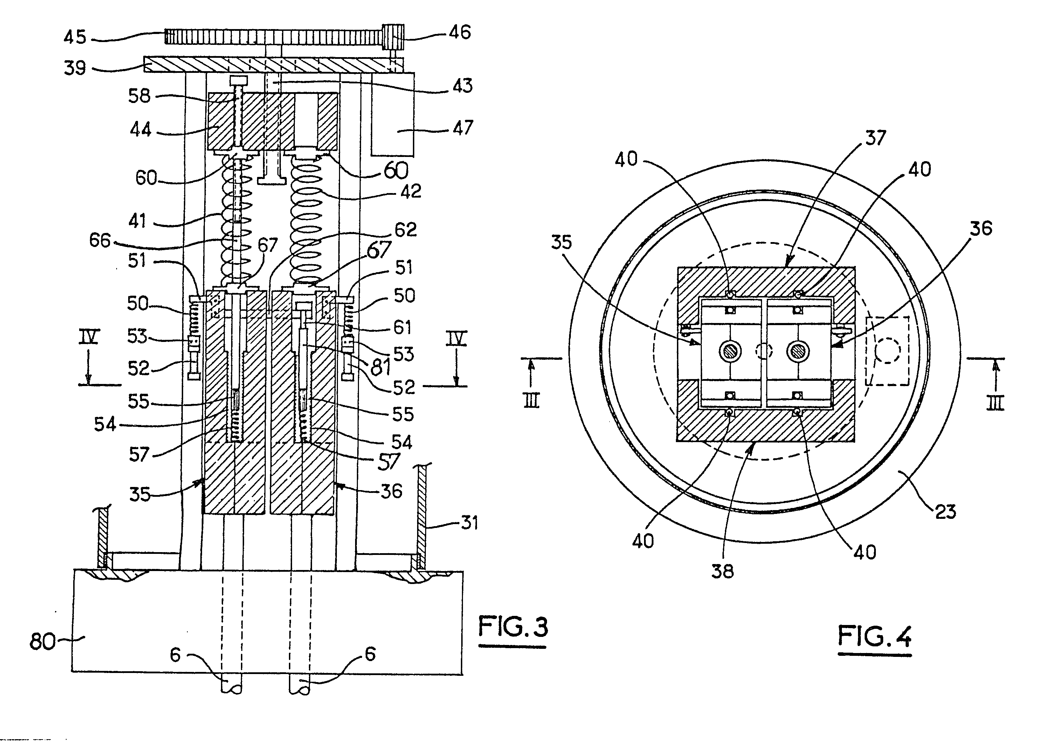

Les deux poussoirs 6 en silice vitreuse traversent la platine 23 et font saillie à l'intérieur d'un capot cylindrique 31 (figures 1A, 1B et 3) dont est pourvu la tête 7 du dilatomètre. Le capot 31 est amovible; il est fixé par vissage sur une embase 80 de la tête 7 du dilatomètre. La zone entourée par le capot 31 est thermostatée par une circulation d'eau distillée(non représentée). L'extrémité supérieure des deux poussoirs 6, qui fait saillie au-dessus de la platine 23 est solidarisé avec un coulisseau 35, 36.

Les deux coulisseaux 35 et 36 sont guidés dans l'axe de déplacement des poussoirs 6 par deux glissières verticales 37, 38 raccordées à l'embase 80 et à leur partie supérieure à une entretoise 39. Ainsi qu'on peut le voir sur la coupe horizontale de la figure 4, la section des deux glissières 37, 38 affecte la forme d'un U; les ailes des deux U sont tournées l'une vers l'autre et sont coplanaires; sur l'âme centrale des deux U sont prévues deux rainures verticales 40 recevant une cage de roulement à billes. Ces cages de roulement visent à réduire à une valeur aussi faible que possible les frottements des coulisseaux 35, 36 sur les glissières 37, 38.

La paroi supérieure des deux coulisseaux 35, 36 coopère avec un ressort d'appui 41, 42 permettant d'appliquer sur l'échantillon à étudier 1 et l'étalon 2 une force d'appui réglable. Les deux ressorts d'appui tarés 41, 42 peuvent être comprimés au moyen d'un système vis-écrou 43-44. Dans ce système, la rotation de la vis 43 entraîne la translation de l'écrou 44 guidé par les deux glissières 37, 38. La vis 43 est montée à rotation sur l'entretoise 39; son extrémité supérieure est solidaire d'une roue dentée 45 qui engrène avec le pignon 46 d'un moteur électrique d'entraînement 47 également porté par l'entretoise 39. Le moteur électrique 47 peut tourner aussi bien dans un sens que dans l'autre. Par conséquent, la mise en route du moteur 47 peut entraîner soit l'abaissement, soit le soulèvement de l'écrou 44 du système vis-écrou, sur lequel s'appuient les deux ressorts 41, 42. La mesure de l'allongement ou du raccourcissement du ressort taré 41, au moyen d'un capteur de déplacement électrique décrit ci-après permet de déterminer, après étalonnage, l'intensité de la force d'appui appliquée sur l'échantillon à étudier 1 et d'en déduire la force d'appui appliquée sur l'étalon 2.

Il est également prévu pour chacun des deux coulisseaux 35, 36 un système destiné à la compensation du poids du coulisseau proprement-dit et du poussoir correspondant 6, ainsi que des forces de frottement du coulisseau sur les glissières 37, 38. Un tel système comprend un ressort 50 agissant sur une potence 51 assujettie au coulisseau 35, 36. L'action de soulèvement du ressort 50 peut être ajusté au moyen d'une vis de réglage 52 pouvant avoir un mouvement hélicoïdal par rapport à un écrou associé 53, fixé sur la glissière verticale 37.

Les deux coulisseaux 35, 36 ont la forme générale d'un parallélipipède rectangle. Dans l'axe de symétrie vertical de ces deux parallélipipèdes rectangles est prévu un puits. Dans chacun des deux puits précités est disposée la bobine 54 d'un capteur de déplacement électrique. Sur chaque capteur, un noyau de ferrite 55 est déplaçable, en fonction d'une variation de longueur à déterminer, par rapport à la bobine 54 associée. Le capteur de déplacement électrique associé au coulisseau 36 est destiné à la détermination de la variation relative de longueur de l'échantillon à étudier 1 par rapport à l'étalon 2, tandis que le capteur de déplacement électrique associé au coulisseau 35 sert à mesurer la variation de longueur du ressort d'appui 41 et, par suite, la variation de l'intensité de la force d'appui exercée par ce ressort sur l'échantillon à étudier 1.

Sur ce dernier capteur de déplacement électrique, le noyau de ferrite 55 est fixé à l'extrémité inférieure d'une tige 66 en silice vitreuse. Entre l'extrémité inférieure du noyau de ferrite 55 et le fond du puits est inséré un ressort 57. A sa partie haute, la tige 66 en silice vitreuse fait saillie axialement à l'extérieur du coulisseau 35; elle traverse librement un bouchon creux 67 posé sur l'ouverture du puits et sur lequel porte le ressort d'appui 41; la tige de silice vitreuse 66 est disposée à l'intérieur du ressort d'appui 41; sur son extrémité supérieure, vient en appui simple une vis de réglage 58 vissée dans un trou taraudé pratiqué dans l'écrou 44 du système vis-écrou (43-44). Au débouché inférieur du trou taraudé, est également vissé un bouchon creux 60 sur lequel porte l'extrémité supérieure du ressort d'appui 41. La vis de réglage 58 peut librement traverser le bouchon creux 60 et être animée d'un mouvement hélicoïdal, lorsque l'on agit sur sa tête, par rapport à l'écrou 44 du système vis-écrou (43-44). Ainsi, on conçoit que la manoeuvre de la vis de réglage 58 permette de déplacer, à l'encontre du ressort 57, plus ou moins le noyau de ferrite 55 dans la bobine 54 du capteur de déplacement électrique.

Le noyau de ferrite 55 du capteur de déplacement électrique associé au coulisseau 36 est, quant à lui, solidarisé, par l'intermédiaire d'une petite tige 81 en silice vitreuse, avec une vis de réglage 61 portée par une patte de couplage 62 assujettie au coulisseau 35. La vis de réglage 61 peut avoir un mouvement hélicoïdal par rapport à la patte de couplage 62, ce qui permet d'ajuster la position relative du noyau de ferrite 55 par rapport à la bobine 54 correspondante.

La variation de longueur de l'échantillon à étudier 1 transmise par le poussoir correspondant 6, entraîne le déplacement dans les mêmes proportions du coulisseau 35 et, par suite de la bobine 54 associée relativement au noyau de ferrite 55 qui demeure fixe. Le déplacement précité du coulisseau 35 entraîne le déplacement concomitant, grâce à la patte de couplage 62, du noyau de ferrite 55 par rapport au coulisseau 36, et par conséquent par rapport à la bobine 54 associée. Bien évidemment, la variation de longueur de l'étalon 2 transmise par son poussoir 6 provoque un mouvement correspondant du coulisseau 36 et par suite de la bobine 54 qu'il porte, par rapport au noyau de ferrite 55 lié en mouvement au coulisseau 35. Par conséquent, on conçoit aisément que le déplacement relatif du noyau de ferrite 55 à l'intérieur de la bobine 54 du capteur de déplacement électrique associé au coulisseau 36 permette une mesure de la variation relative de longueur de l'échantillon à étudier 1 par rapport à l'étalon 2.

Préalablement à la mesure des caractéristiques dilatométriques de l'échantillon 1, on procède au réglage de la force d'appui des deux poussoirs 6 sur l'étalon 2 et l'échantillon 1 en mettant en route le moteur électrique 47 permettant, par l'intermédiaire de l'écrou 44 du système vis-écrou (43-44), de comprimer plus ou moins les deux ressorts d'appui 41, 42. L'allongement ou le raccourcissement du ressort d'appui 41, après réglage du zéro, se traduit par un mouvement correspondant du noyau de ferrite 55 par rapport à la bobine 54 du coulisseau 35. Comme la variation de longueur du ressort d'appui 41 est proportionnelle à la force d'appui appliquée, le signal électrique issu du capteur de déplacement associée au coulisseau 35 est représentatif de la force d'appui exercée sur l'échantillon à étudier 1. La force d'appui exercée sur l'étalon 2 se déduit du signal électrique ci-dessus.

Les signaux de sortie des deux capteurs de déplacement électriques qui viennent d'être décrits sont traités dans un amplificateur 70 (schéma des figures 1A, 1B) qui, à son tour, peut délivrer deux grandeurs de sortie, l'une représentative de la force d'appui appliquée sur l'échantillon 1 et l'autre représentative de la variation relative de longueur de l'échantillon 1 par rapport à l'étalon 2. Ces deux grandeurs de sortie sont envoyées sur un enregistreur analogique 72 (figure 1A) du type connu, et/ou sur un système d'acquisition de données qui consiste en un multiplexeur de voies 77 et un convertisseur analogique digital (CAD) 78 interfacé avec un micro-ordinateur 79 et périphériques du système (imprimante 80, lecteur de cassettes 81, unité de disque souple 82 et une table numérique X-Y 83) représenté sur la figure 1B. Les signaux délivrés par les thermocouples 19, 20, 21 sont mesurés et enregistrés comme décrit ci-dessus. On peut en particulier effectuer les mesures suivantes : le temps qui est donné par l'horloge interne du micro-ordinateur, la dilatation différentielle ($\Delta$l);

la force d'appui exercée par le poussoir 6 sur l'échantillon 1; la température de l'échantillon 1, de l'étalon 2 et du manchon de chauffage électrique
12 (figure 1B). Le mini-ordinateur qui est le contrôleur du système d'acquisition, contrôle le multiplexeur de voies 77 et le convertisseur analogique
digital 78, stocke et traite les données, et envoi les résultats aux périphériques du système (imprimante 80, lecteur de cassettes 81, unité de
disque souple 82, table numérique 83).

Le dilatomètre de cet exemple de réalisation fonctionne comme suit:
on met en place l'échantillon 1 à étudier et l'étalon 2 sur la plaquette 3
du tube-support 4 que l'on fixe à l'embase 80 de la tête 7; puis l'ensemble
formé par le tube de protection 16 et son manchon de chauffage 12 ainsi que
le cryostat 8, est enfilé autour du tube-support 4 et vissé sous la platine
23. On règle manuellement les deux systèmes de compensation en agissant sur
la vis 52 de façon que la base de section élargie des deux poussoirs 6 en
silice vitreuse vienne en appui sur l'échantillon 1 et l'étalon 2; puis, on
descend l'écrou 44 du système vis-écrou (43-44) jusqu'à ce que les deux
bouchons creux 60 soient en appui sur la partie supérieure des deux ressorts
d'appui 41, 42; puis, on ajuste le "zéro électrique" du capteur de déplacement électrique du coulisseau 35, en agissant sur la vis de réglage 58. On
peut alors mettre les ressorts d'appui 41, 42 en compression au moyen du
moteur électrique 47, la valeur de la force d'appui pouvant être directement
lue sur l'enregistreur analogique 72, et/ou sur le système d'acquisition et
traitement de données 77, 78, 79, 80, 81, 82, 83, à condition bien entendu
que le capteur de déplacement correspondant avec les ressorts d'appui 41, 42
ait fait l'objet d'un étalonnage préalable. Pour la mesure de la différence
de variation de longueur entre l'échantillon 1 et l'étalon 2, on fait une
mise au point grossière en agissant sur la vis de réglage 61; une mise au
point précise étant faite à l'aide d'un potentiomètre situé sur la face
avant de l'amplificateur 70. Le capot de protection 31 qui avait été enlevé
pendant ces réglages manuels, est alors remis en place et l'on peut, s'il y
a lieu, par la commande du moteur 47, réajuster le réglage manuel de la force
d'appui.

Le tube de protection 16 et le manchon de chauffage 12 déterminent
une chambre reliée à la zone où se trouvent les deux capteurs de déplacement
électriques, ladite zone étant isolée thermiquement par le capot 31; cette
chambre est destinée à être balayée par un gaz, de préférence, bon-conducteur
thermique tel que l'hélium par exemple. En outre, la zone entourée par le
capot 31 est avantageusement thermostatée au voisinage de la température
ambiante au moyen d'une circulation d'eau distillée.

L'un des intérêts principaux du dilatomètre selon l'invention est

0028972

d'autoriser l'étude des caractéristiques dilatomètriques d'un échantillon solide en faisant varier linéairement la température dudit échantillon. A cet effet, on prévoit un dispositif de régulation de la quantité de chaleur fournie par le manchon de chauffage électrique 12 : ainsi qu'il est visible sur les figures 1A, 1B, la grandeur de mesure délivrée par le thermocouple 19 (Au/Fe-Ni/Cr) disposé sur le manchon de chauffage 12 est comparée à une grandeur de référence susceptible de varier linéairement qui est fournie par un générateur programmable à tension continue 74. L'écart entre ces deux grandeurs est envoyé sur un régulateur de température PID 75 (à action proportionnelle, intégrale et dérivée) qui à son tour délivre un signal de commande à un actuateur 76, en l'espèce, un générateur de puissance à thyristors alimentant le manchon de chauffage électrique 12. Grâce à cette disposition, on peut notamment effectuer en cours d'expérience un chauffage ou un refroidissement linéaires de l'échantillon 1 et de l'étalon 2 dans une gamme de températures allant d'environ 4 à 500°K en maintenant dans le cryostat 8 une circulation d'hélium liquide. En outre, on peut maintenir l'échantillon 1 et l'étalon 2 à une température constante quelconque prise dans la gamme de températures précitée, pour une durée indéterminée.

Il est bien entendu que le mode de réalisation ci-dessus décrit n'est aucunement limitatif et pourra donner lieu à toutes modifications désirables, sans sortir pour cela du cadre de la présente invention; en particulier, on peut prévoir que la vis 61 soit directement accessible de l'extérieur de l'appareil ou qu'elle soit commandée par un moteur pas à pas ou par toute télécommande appropriée; le calculateur qui assure le traitement et l'exploitation des résultats de mesure peut aussi assurer la programmation et la régulation de température de l'appareil.

REVENDICATIONS

1 - Dilatomètre différentiel destiné à la détermination, en particulier à des basses températures, des variations relatives de longueur de deux échantillons solides, dont l'un peut être un étalon dont la dilatation thermique est parfaitement connue, ou des variations absolues de longueur d'un échantillon solide, l'échantillon et l'étalon étant placés à l'intérieur d'un tube qui les supporte, les variations de longueur de l'échantillon et de l'étalon étant transmises, par deux poussoirs s'étendant à l'intérieur du tube-support précité, dans la tête du dilatomètre où les deux poussoirs produisent le déplacement relatif d'un noyau par rapport à l'enroulement bobiné d'un capteur de déplacement électrique, le signal de sortie dudit capteur étant envoyé sur un amplificateur dont la grandeur de sortie est proportionnelle à la variation relative de longueur de l'échantillon à étudier par rapport à l'étalon, caractérisé par le fait que le tube-support (4) et les deux poussoirs (6) sont disposés verticalement, le tube-support étant disposé au-dessous de la tête (7) du dilatomètre; que le tube-support (4) est au moins partiellement logé à l'intérieur d'un cryostat (8) permettant la circulation d'un fluide cryogénique, pendant la mesure, autour de l'échantillon à étudier (1) et de l'étalon (2), la partie du tube-support (4) où sont placés l'échantillon à étudier (1) et l'étalon (2) étant, en outre, entourée dans le cryostat (8) par un manchon de chauffage électrique (12) dont on peut faire varier le dégagement thermique au moyen d'un dispositif de régulation de la température, ledit manchon évitant un contact direct entre l'échantillon et l'étalon, d'une part, et le fluide cryogénique, d'autre part, le manchon de chauffage électrique (12) étant fixé à sa partie haute sur la base d'un tube de protection (16) en matériau mauvais conducteur de la chaleur, qui entoure le tube support (4), le cryostat renfermant le manchon de chauffage (12) et la base du tube de protection (16).

2 - Dilatomètre différentiel selon la revendication 1, caractérisé par le fait qu'il est pourvu de capteurs de température (20,21) destinés à la détermination de la température de l'échantillon à étudier (1) et de la température de l'autre échantillon à étudier ou de l'étalon (2), les signaux de mesure des capteurs de température ainsi que le signal de sortie représentatif de la variation relative de longueur de l'échantillon à étudier par rapport à l'étalon et le signal représentatif de la force d'appui exercée sur l'échantillon à étudier étant, par exemple, envoyés sur un enregistreur analogique (72) et/ou sur une acquisition numérique de données (77,78) interfacée ou non avec un micro/mini-ordinateur (79) et périphériques du système d'acquisition et traitement de données (80, 81, 82, 83).

3 - Dilatomètre différentiel selon la revendication 1, caractérisé par le fait que le dispositif de régulation consiste en une boucle de régulation fermée, dans laquelle le signal de mesure fourni par au moins un thermocouple linéarisé (19) placé sur le manchon de chauffage (12) est comparé à un signal de référence éventuellement variable, par exemple linéairement, fourni par un générateur programmable à tension continue (74), l'écart entre ces deux grandeurs commandant un générateur de puissance (76) qui alimente le chauffage électrique du manchon.

4 - Dilatomètre différentiel selon l'une des revendications 1 à 3, caractérisé par le fait que les deux poussoirs (6) et le tube-support (4) sont en silice vitreuse, que le manchon de chauffage électrique (12) est en un métal bon conducteur de la chaleur tel que le cuivre, que le tube de protection (16) est en acier inoxydable et est soudé à la partie haute de manchon de chauffage (12).

5 - Dilatomètre différentiel selon la revendication 4, caractérisé par le fait que le cryostat (8), le tube de protection (16) et le manchon de chauffage électrique (12) qui en est solidaire sont suspendus et fixés par vissage à la paroi inférieure d'une platine (23) en matériau mauvais conducteur de la chaleur portant sur sa paroi supérieure la tête (7) du dilatomètre, ladite platine étant supportée par des moyens (33) ayant un effet anti-vibratoire, la tête (7) du dilatomètre supportant le tube-support (4).

6 - Dilatomètre différentiel selon l'une des revendications 1 à 5, caractérisé par le fait que le tube de protection (16) et le manchon de chauffage (12) déterminent une chambre reliée à la zone où se trouve le capteur de déplacement, ladite zone étant isolée de l'extérieur par un capot (31) et la chambre pouvant être balayée par un gaz, de préférence bon conducteur thermique.

7 - Dilatomètre différentiel selon l'une des revendications 1 à 6, caractérisé par le fait qu'à l'intérieur de la tête (7) du dilatomètre, chaque poussoir (6) est solidarisé à sa partie supérieure avec un coulisseau (35, 36), les deux coulisseaux étant guidés verticalement par des glissières (37, 38) selon un axe parallèle à l'axe des poussoirs (6), chaque coulisseau (35, 36) étant soumis à une force d'appui réglable au moyen d'un ressort d'appui (41, 42).

8 - Dilatomètre différentiel selon la revendication 7, caractérisé par le fait que les deux ressorts d'appui (41, 42) agissant sur les coulisseaux (35, 36) des deux poussoirs (6) peuvent être comprimés, de façon réglable, au moyen de l'écrou (44) d'un système vis-écrou (43, 44), l'écrou (44) étant guidé en translation par les glissières verticales (37,38) des deux coulisseaux (35, 36) alors que la vis associée (43) est fixe par rapport auxdites glissières (37, 38) et est solidaire d'une roue dentée

(45) engrénant avec le pignon (46) d'un moteur électrique d'entrainement (47).

9 - Dilatomètre différentiel selon l'une des revendications 7 ou 8, caractérisé par le fait que les deux coulisseaux (35,36) sont associés chacun à un capteur de déplacement électrique dont le noyau (55) est déplaçable par rapport à l'enroulement bobiné (54) qui est solidaire du coulisseau.

10 - Dilatomètre différentiel selon l'une des revendications 7 à 9, caractérisé par le fait que le coulisseau (35) du poussoir (6) s'appuyant sur l'échantillon à étudier (1) est solidaire, dans son mouvement, du noyau (55) du capteur de déplacement électrique porté par l'autre coulisseau (36), la position du noyau (55) précité par rapport à l'enroulement bobiné (54) associé pouvant être ajusté, au moyen d'une vis de réglage (61).

11 - Dilatomètre différentiel selon l'une des revendications 7 à 10, caractérisé par le fait que la variation de longueur du ressort (41) s'appuyant sur l'échantillon à étudier (1) est transmise au noyau (54) du capteur de déplacement électrique associé au coulisseau (35), le capteur considéré permettant de déterminer, après étalonnage, l'intensité de la force d'appui exercée par le ressort d'appui (41) sur l'échantillon à étudier (1) et d'en déduire celle exercée sur l'étalon (2).

12 - Dilatomètre différentiel selon les revendications 8 et 11 prises simultanément, caractérisé par le fait que l'écrou (44) du système vis-écrou (43-44) porte une vis de réglage (58) déplaçable par rapport à lui, ladite vis permettant d'ajuster, par l'intermédiaire d'une tige enfilée à l'intérieur du ressort d'appui (41) correspondant, la position du noyau (55) relativement à l'enroulement bobiné (54) du capteur de déplacement électrique destiné à mesurer l'intensité de la force d'appui exercée sur l'échantillon à étudier (1).

FIG.1A

0028972

FIG.1B

0028972

3/4

FIG. 2

FIG.3

FIG.4

0028972

# RAPPORT DE RECHERCHE EUROPEENNE

Office européen
des brevets

EP 80 40 1576

| Catégorie | Citation du document avec indication, en cas de besoin, des parties pertinentes | Revendication concernée |
|---|---|---|
| | FR - A - 2 203 516 (AGENCE NATIONALE DE VALORISATION DE LA RECHERCHE) <br><br> * Page 1; page 2; page 3, lignes 1-32 * | 1,4,6, 9,10 |
| | FR - A - 1 441 616 (C.E.A.) <br><br> * Page 1, colonne de droite, ligne 17 à fin; page 2, colonne de gauche, colonne de droite, lignes 1-14 et résumé * | 1,4,8-10 |
| | US - A - 3 898 836 (G.R. CLUSENER) <br><br> * Colonne 1, colonne 2, colonne 3 * | 1,8-10 |
| A | BE - A - 688 175 (CENTRE NATIONAL DE RECHERCHES MÉTALLURGIQUES) <br><br> * Revendications * | 1 |
| A | US - A - 3 805 589 (G.R. CLUSENER) <br><br> * Colonne 1, colonne 2, lignes 1-30 * | 1 |
| A | FR - A - 1 516 237 (SNAM PROGETTI) <br><br> * Résumé * | 1 |
| A | FR - A - 2 190 272 (AGENCE NATIONAL DE VALORISATION DE LA RECHERCHE) ./. | 1 |

**DOCUMENTS CONSIDERES COMME PERTINENTS**

**CLASSEMENT DE LA DEMANDE (Int. Cl. 3)**

**DOMAINES TECHNIQUES RECHERCHES (Int. Cl. 3)**

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 30-12-1980 | CALLEWAERT |

OEB Form 1503.1   06.78

Europäisches
Patentamt

**EUROPÄISCHER RECHERCHENBERICHT**

Nummer der Anmeldung

EP 80 40 1576

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | * Revendications * <br><br> -- | | |
| A | <u>DE - A - 1 648 247</u> (LINDE AG) <br> * Revendications * <br><br> -- | 1 | |
| A | INTERNATIONAL JOURNAL OF POLYMERIC MATERIALS, vol. 3, no. 3, octobre 1974, <br> Londres GB <br> J.M. ROE et al.: "Thermal expansivity and relaxational behavior of amorphous polymers at low temperatures", pages 193-227 <br><br> * Page 194, ligne 2.1 - page 198, ligne 2.2 * <br><br> ---- | 1 | RECHERCHIERTE SACHGEBIETE (Int. Cl.³) |

EPA Form 1503.2  06.78